(19) Europäisches Patentamt / European Patent Office / Office européen des brevets

(11) **EP 3 151 707 B1**

(12) **EUROPEAN PATENT SPECIFICATION**

(45) Date of publication and mention
of the grant of the patent:
**03.10.2018 Bulletin 2018/40**

(21) Application number: **15725068.9**

(22) Date of filing: **03.06.2015**

(51) Int Cl.:
***A47J 19/02*** *(2006.01)*

(86) International application number:
**PCT/EP2015/062311**

(87) International publication number:
**WO 2015/185582 (10.12.2015 Gazette 2015/49)**

(54) **CENTRIFUGAL JUICER**

ZENTRIFUGALENTSAFTER

CENTRIFUGEUSE PRESSE-FRUITS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.06.2014 EP 14171540**

(43) Date of publication of application:
**12.04.2017 Bulletin 2017/15**

(73) Proprietor: **Koninklijke Philips N.V.
5656 AE Eindhoven (NL)**

(72) Inventors:
• **FLOESSHOLZER, Hannes, Uwe
5656 AE Eindhoven (NL)**
• **HOLZBAUER, Juergen
5656 AE Eindhoven (NL)**

(74) Representative: **Freeke, Arnold
Philips Intellectual Property & Standards
High Tech Campus 5
5656 AE Eindhoven (NL)**

(56) References cited:
**US-A- 5 405 096     US-A- 5 417 152**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# EP 3 151 707 B1

## Description

FIELD OF THE INVENTION

The present invention relates to a centrifugal juicer comprising a food shredding element cooperating with a circular sieve comprising a plurality of openings and a motor adapted to rotate the circular sieve.

BACKGROUND OF THE INVENTION

In modern society, there is a drive towards healthy living. To this end, many consumers tend to consume fresh produce as part of a healthy diet. An example of such fresh produce is juice freshly extracted from juice-containing food products such as fruit and vegetables. Such fresh juice may be produced using a centrifugal juicer, in which a rotating shredding element shreds the food product, which shredding element cooperates with a rotating sieve for extracting the juice from the shredded food product. Such freshly extracted juice is perceived to be healthier and better tasting than the commercially available packaged juices, which may be less fresh and may contain undesirable additives such that the juice no longer is pure juice.

Commercially available juices can be purchased in different varieties, most notably clear juices and cloudy juices. In cloudy juices, some of the solid matter of the food product, such as food fibers, is suspended in the juice to give the juice a more substantial texture. Such solid matter is commonly referred to as food pulp or simply pulp. Different consumers may prefer different types of juice; some consumers may not like to have 'bits', i.e. pulp, in their juice and therefore prefer a smooth, clear juice whereas other consumers may prefer the presence of such pulp and will therefore prefer the cloudy juices.

It is therefore desirable to be able to control the pulp content in juice freshly produced with centrifugal juicers. US 2013/0312623 A1 discloses a fiber flow controlled centrifugal bowl mechanism including a centrifugal bowl and a mesh filter bracket sleeved at the bottom of the centrifugal bowl. The centrifugal bowl is provided with mesh holes allowing fibers to pass. The mesh size is adjustable to adjust the amount of fibers passing the mesh holes. A drawback of this solution is that the user needs to manually adjust the centrifugal bowl to achieve the desired pulp content in the beverage (juice), which may not be particularly intuitive. Moreover, the relatively complex structure of the centrifugal bowl makes cleaning of the bowl more cumbersome and adds to the cost of the bowl.

US 5405096 (A) discloses a multipurpose pulverizer which has the functions of pulverizing, cutting, juicing and centrifugal-dividing foods simultaneously.

SUMMARY OF THE INVENTION

The present invention seeks to provide a centrifugal juicer that can produce juices with user-controlled pulp content in an intuitive and cost-effective manner.

According to an aspect, there is provided a centrifugal juicer comprising a food shredding element cooperating with a circular sieve comprising a plurality of openings; a motor adapted to rotate the circular sieve, wherein the motor has a variable rotation speed and said openings are dimensioned such that food pulp can be forced through said openings at certain rotation speeds of the motor; and a user interface comprising a pulp content selection function, wherein the variable rotation speed of the motor is controlled by said pulp content selection function.

The present invention is based on the insight that by appropriately dimensioning the openings in the circular sieve, the pulp content in the juice passing through the sieve during operation of the centrifugal juicer can be controlled by the speed at which the sieve is rotated by the motor of the centrifugal juicer. The appropriate speeds are typically pre-programmed in the centrifugal juicer and can be simply selected by the user selecting the desired amount of pulp in the juice using the pulp content selection function of the user interface of the centrifugal juicer. The selected pulp content corresponds to one of the pre-programmed speed settings of the motor, such that the centrifugal juicer automatically is operated at the appropriate speed by the intuitive selection of the pulp content by the user. Moreover, since a typical motor of a centrifugal juicer already is capable of operating at variable speeds, this additional juicer functionality can be implemented at minimal additional cost and without compromising the ease of use such as cleaning of the centrifugal juicer.

The pulp content selection function may be implemented in any suitable manner. For instance, the pulp content selection function may be implemented as a switch that can be switched between a first position indicating juice having a lower pulp content and a second position indicating juice having a higher pulp content, wherein the motor operates at a first speed when the switch is in the first position and operates at a second speed when the switch is in the second position, the second speed being higher than the first speed. This for instance allows the centrifugal juicer to be operated at discrete pre-set speeds, thereby minimizing the amount of input the user has to provide in order to operate the centrifugal juicer.

2

Alternatively, the switch may be a dial that can be turned between the first position and the second position. This allows the user to select a wide range of rotation speeds, which range being delimited at the lower end by the first speed and at the higher end by the second speed, thereby giving the user more fine-grained control over the pulp content in the juice to be produced by the centrifugal juicer.

In an embodiment, said openings may have a diameter in the range of 0.25-0.5 mm. It has been found that if the opening diameter is selected within this range, the desired control over the pulp content in the juice as a function of the rotation speed of the circular sieve can be obtained.

In a particular advantageous embodiment, said openings have a diameter of about 0.35 mm, and wherein the second speed is in the range of 1.3 - 1.5 times the first speed. It has been found that this combination of diameter and rotation speed ratios produces a particularly suitable difference between clear and cloudy juices. For instance, the circular sieve may have a diameter in the range of 110-160 mm, the first speed may be in the range of 8,000 - 9,000 rotations per minute and the second speed may be in the range of 10,500 - 12,000 rotations per minute.

In a particular advantageous alternative embodiment, said openings have a diameter of about 0.30 mm, and wherein the second speed is in the range of 1.5 - 1.7 times the first speed. It has been found that this combination of diameter and rotation speed ratios also produces a particularly suitable difference between clear and cloudy juices. For instance, the circular sieve may have a diameter in the range of 110-160 mm, the first speed may be in the range of 8,000 - 9,000 rotations per minute and the second speed may be in the range of 12,000 - 15,000 rotations per minute.

In a particular advantageous alternative embodiment, said openings have a diameter of about 0.40 mm, and wherein the second speed is in the range of 1.3 - 1.4 times the first speed. It has been found that this combination of diameter and rotation speed ratios also produces a particularly suitable difference between clear and cloudy juices. For instance, the circular sieve may have a diameter in the range of 110-160 mm, the first speed may be in the range of 7,000 - 8,000 rotations per minute and the second speed may be in the range of 11,000 - 12,000 rotations per minute.

The user interface may further comprise a food type selection function, wherein the rotation speed of the motor selected with the pulp content selection function is a function of the food type selection function. This has the advantage that for different types of foods, e.g. food types having different fiber sizes, a different set of speed settings for the pulp extraction function may be used such that for each food type a set of speeds can be selected with the pulp content selection function that is optimized for that particular food type, thereby producing consistent control over the pulp content in the produced juice for a range of different foods.

The food shredding element may form part of the circular sieve, i.e. may form a unit with the circular sieve for a particularly compact centrifugal juicer.

The centrifugal juicer may further comprise a juice collector cooperating with the circular sieve such that juice passing through said openings is collected in the juice collector such that multiple servings of juice may be produced in one go.

The centrifugal juicer may be provided with a plurality of circular sieves each having a plurality of openings, wherein the diameter of said openings is different for different sieves such that a sieve may be selected based on a particular food type, e.g. a food type having larger fibers may require a sieve having larger holes than a food type having relatively small fibers.

BRIEF DESCRIPTION OF THE DRAWINGS

Embodiments of the invention are described in more detail and by way of non-limiting examples with reference to the accompanying drawings, wherein:

FIG. 1 schematically depicts a perspective view of a centrifugal juicer according to an example embodiment;
FIG. 2 schematically depicts a perspective view of a centrifugal juicer according to another example embodiment;
FIG. 3 schematically depicts a perspective view of a centrifugal juicer according to yet another example embodiment; and
FIG. 4 schematically depicts a graph of experimental results of pulp content produced in the juice of various fruits using a circular sieve with holes having a 0.40 mm diameter.

DETAILED DESCRIPTION OF EMBODIMENTS

It should be understood that the Figures are merely schematic and are not drawn to scale. It should also be understood that the same reference numerals are used throughout the Figures to indicate the same or similar parts.

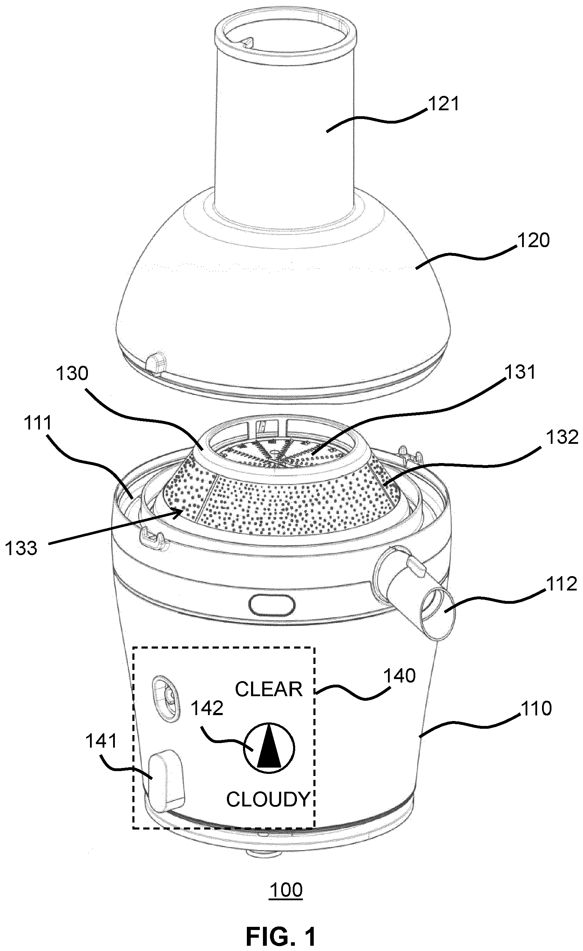

FIG. 1 schematically depicts a centrifugal juicer 100 (from here on simply referred to as juicer) according to an example embodiment. The juicer 100 typically comprises a body 110 including a user interface 140 and a juice collector 111 forming part of a chamber of the body 110 for receiving a unit 130 including a shredding element 131 such as a shredding plate and a circular sieve 132 comprising a plurality of openings 133. It is noted that where reference is made to the unit 130, this is intended to indicate that the shredding element 131 and the circular sieve 132 cooperate as a unit. It does not necessarily mean that the shredding element 131 forms an integral part of the circular sieve 132; it is equally feasible that the shredding element 131 and the circular sieve 132 are separate elements that cooperate to form the unit 130.

The juice collector 111 may be a removable portion of the body 110, for instance to facilitate easy cleaning of the juice collector 111. The juice collector 111 may be made of any suitable material, e.g. a dishwasher-safe material, e.g. a hard-wearing plastic such as melamine, polycarbonate, acrylonitrile butadiene styrene (ABS) or the like.

The circular sieve 132 may be shaped as a conical frustum as shown in FIG. 1 by way of non-limiting example, in which the sieve 132 tapers outwardly in the direction from the lid 120 towards the body 110, although any other suitable shape may also be contemplated, e.g. a conical sieve 132 tapering outwardly in the direction from the body 110 towards the lid 120, a cylindrical sieve 132 or the like. The shredding element 131 and the circular sieve 132 may be made of any suitable material, which preferably is a dishwasher-safe material, e.g. a metal or metal alloy such as stainless steel, a hard wearing plastic and so on. When correctly inserted into the receiving chamber of the body 110, the unit 130 is cooperatively coupled to an electromotor (not shown) inside the body 110 for rotating the unit 130 at a certain speed. The electromotor will also be simply referred to as the motor.

The juicer 100 may further comprise an optional cover or lid 120, which cover may include a feeding tube 121 for feeding food products onto the shredding element 131. A pusher (not shown) for insertion into the feeding tube 121 may also be provided for pushing the food products through the feeding tube 121 towards the shredding element 131. Alternatively, the lid 120 may be omitted in which case a user may place the food product directly onto the shredding element 131, as for instance is the case in juicers having a star-shaped conical shredding element centered in a circular sieve. However, in the remainder of this application the various aspects of the present invention will be explained based on a juicer 100 as shown in FIG. 1 by way of non-limiting example.

In operation, the motor of the juicer 100 rotates the unit 130 including the shredding element 131 and the circular sieve 132 at a certain speed, which causes the food forced onto the rotating shredding element 131 to be shredded, with the food shreds being forced outwardly by the centrifugal force onto the sieve 132 including the openings 133. At the sieve 132, the centrifugal force forces the juice to escape the sieve through the holes 133 onto the inner walls of the lid 120, where the juice runs off into the juice collector 111. The pulp may be fed into a separate pulp collector (not shown) underneath the sieve 132, and can be removed therefrom upon completion of the juicing process as is well-known per se.

The thus collected juice may be fed into a receptacle (not shown) through spout 112, which may have any suitable shape. Alternatively, the spout 112 may be omitted, such that the juice may be poured from the juice collector 111 upon its removal from the body 110 upon completion of the juicing process. Other suitable arrangements will be immediately apparent to the skilled person.

It has been realized by the present inventors that a relationship exists between the speed at which the unit 130 is rotated, the diameter of the holes 133 in the circular sieve 132 and the pulp content in the juice produced by the juicer 100. Specifically, the present inventors have realized that when the diameter of the holes 133 is chosen in a suitable range, such as a range of 0.25 - 0.50 mm, the unit 130 may rotated at discrete rotation speeds of at which juices with different pulp contents can be consistently produced. For instance, at a relatively low rotation speed, a juice having a negligible pulp content, e.g. a relatively clear juice may be produced, whereas at a higher rotation speed, a juice having an increased pulp content, e.g. a relatively cloudy juice, may be produced.

This is demonstrated by the experimental data presented in Tables 1-4, at which units 130 including sieves 132 having a diameter of about 135 mm with different hole diameters (0.30 mm, 0.35 mm and 0.40 mm) were rotated at different speeds (the results for 9,000 RPM, 10,700 RPM and 13,000 RPM are shown in these Tables) and subjected to different types of fruit and vegetables. The pulp content in the thus produced juices is shown in Tables 1-4. The pulp content is expressed as a percentage of the total weight of the produced juice.

Table 1 - Watermelon

|  | 0.30 mm | 0.35 mm | 0.40 mm |
|---|---|---|---|
| 9,000 RPM | 0.2% | 0.25% | 0.3% |
| 10,700 RPM | 0.3% | 0.4% | 0.5% |
| 13,000 RPM | 0.5% | 0.6% | 0.7% |

Table 2 - Orange

|  | 0.30 mm | 0.35 mm | 0.40 mm |
|---|---|---|---|
| 9,000 RPM | 0.6% | 0.7% | 0.8% |
| 10,700 RPM | 0.9% | 1.0% | 1.2% |
| 13,000 RPM | 1.1% | 1.4% | 1.6% |

Table 3 - Carrot

|  | 0.30 mm | 0.35 mm | 0.40 mm |
|---|---|---|---|
| 9,000 RPM | 0.3% | 0.5% | 0.7% |
| 10,700 RPM | 0.5% | 0.7% | 1.3% |
| 13,000 RPM | 1.0% | 1.2% | 1.5% |

Table 4 - Pineapple

|  | 0.30 mm | 0.35 mm | 0.40 mm |
|---|---|---|---|
| 9,000 RPM | 0.1% | 0.15% | 0.2% |
| 10,700 RPM | 0.1% | 0.2% | 0.25% |
| 13,000 RPM | 0.2% | 0.3% | 0.4% |

As can be seen from the above Tables, the pulp content in the juices produced from a variety of food types, e.g. hard foods and soft foods such as a relatively hard fruit such as pineapple, watermelon or apple, a relatively soft fruit such as orange, a relatively hard vegetable such as a carrot and so on can be controlled by selecting an appropriate rotation speed of the motor driving the unit 130.

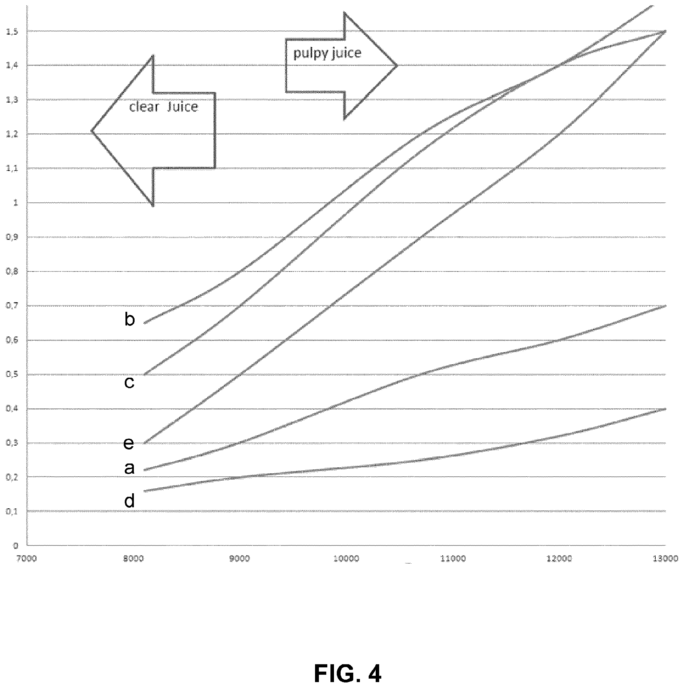

This is further demonstrated in FIG. 4, in which the pulp content in juices from a number of foods as a function of the rotation speed of a sieve 132 having a diameter of approximately 135 mm and openings 133 with a diameter of 0.40 mm is depicted. The rotation speed is depicted on the x-axis whereas the pulp content (as before in weight percent) is depicted on the y-axis of the graph. The juices in FIG. 4 are watermelon juice (a), orange juice (b), carrot juice (c), pineapple juice (d), and apple juice (e). As can be seen from FIG. 4, the pulp content in these juices can be accurately controlled by selection of a corresponding rotation speed of the unit 130. Due to the different types of fibers and/or fiber content in these different types of food, the amount of fibers produced at a particular rotation speed will differ between the different types of food; for instance, a fruit such as orange will produce a higher fiber content in the juice than the fruit such as watermelon, which typically comprises coarser fibers than orange, such that higher rotation speeds and/or larger diameter openings 133 in the sieve 132 are required to obtain the same pulp content. For example, a pulp content of 0.7% may be produced in orange juice at a rotation speed of about 8,200 RPM whereas the same pulp content in watermelon juice may be produced at a rotation speed of about 13,000 RPM.

Now, upon returning to FIG. 1, this insight has been utilized in the present invention by extending the juicer 100 with functionality that allows a user to specify the desired pulp content in the juice to be produced by the juicer 100. To this end, the user interface 140 typically includes a pulp content selection function 142, which allows the user to specify the pulp content of the juice. For instance, as shown in FIG. 1 by way of non-limiting example, the user may specify if the user requires the juice to be clear or cloudy, with a clear juice comprising a smaller pulp content that a cloudy juice as previously explained. Alternative indications of the required pulp content are of course equally feasible.

The pulp content selection function 142 is conductively coupled to a controller (not shown) of the motor of the juicer 110, wherein the controller is adapted to detect the pulp content selected by the user by means of the pulp content selection function 142 and to select a rotation speed at which the motor is to be operated in accordance with the selected pulp content. For example, the controller may include a lookup table or the like in which each pulp content selection option is matched to a corresponding rotation speed of the motor, wherein the controller is adapted to consult the lookup table to retrieve the appropriate rotation speed upon detection of the selected pulp content. Alternatively, the appropriate rotation speeds may be hard-wired into the controller. It is of course well-known per se to provide motor controllers that are responsive to a user interface, and it suffices to say that any suitable control mechanism for controlling the motor in response to such a user interface may be used.

In FIG. 1, the pulp content selection function is implemented as a switch 142 that can be switched between two discrete positions shown by way of non-limiting example as "CLEAR" AND "CLOUDY". However, it should be understood that such a switch 142 may be switched between any suitable plurality of discrete positions, e.g. three positions, four positions and so on, with each position specifying a different pulp content in the juice to be produced by the juicer 100.

Moreover, it should be understood that the switch 142 is shown as a mechanical switch by way of non-limiting example only. The switch 142 may be implemented in any suitable manner, such as by way of one or more discrete selection buttons, a touch-screen interface, a selection button cooperating with a display for selecting a displayed selection option, and so on. It will be appreciated by the person skilled in the art that any suitable selection mechanism, e.g. any suitable embodiment of the switch 142 may be contemplated.

In addition, it should be understood that the user interface 140 optionally may comprise additional switches, such as for instance an on/off switch 141, which also may be implemented in any suitable manner.

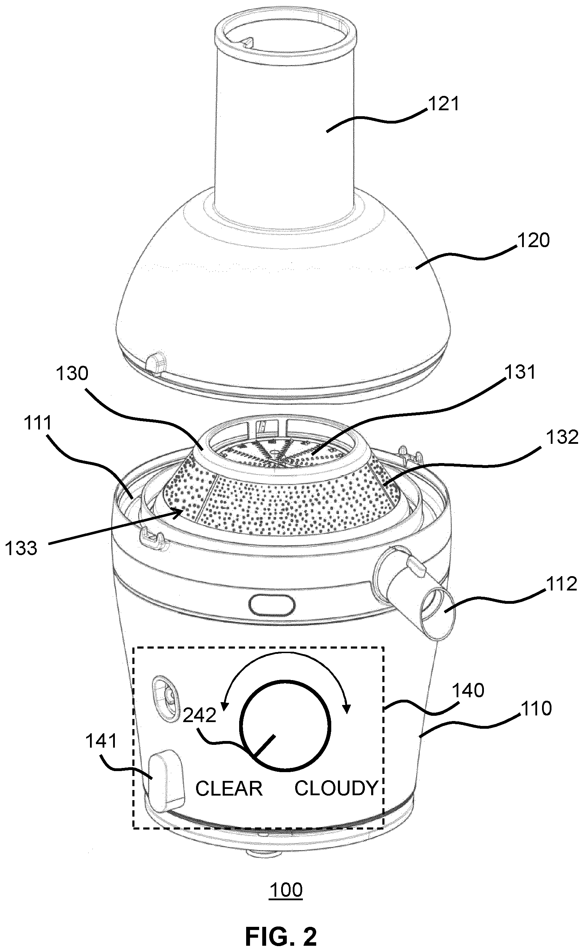

It is not necessary that the switch 142 is configured to select from a number of discrete pulp content options. An alternative embodiment of the juicer 100 is shown in FIG.2, in which the switch 142 for selecting such discrete options is replaced by a dial 242 that can be rotated between a first position indicated by way of non-limiting example as 'CLEAR' and a second position indicated by way of non-limiting example as 'CLOUDY', wherein the motor controller can be controlled in a continuous (i.e. non-stepped) fashion by the dial 242. This provides the user of the juicer with greater control over the pulp content in the juice to be produced by the juicer 100.

In the above embodiments, the juicer 100 may be operated at the same pre-defined operation speeds regardless of the food type fed into the juicer 100 through the feeding tube 120. It has been found that where the juicer 100 has to be capable of controlling the pulp content in juices produced from different types of food products using a single set of pre-defined rotation speeds of the unit 130, particularly good results are obtained if the diameter of the openings 133 is chosen in the range of 0.30-0.40 mm.

For example, if the diameter of the openings 133 is about 0.35 mm, particularly good results are obtained if the second or highest rotation speed of the unit 130 is in the range of 1.3 - 1.5 times the first or lowest rotation speed of the unit 130. Alternatively, if the diameter of the openings 133 is about 0.30 mm, particularly good results are obtained if the second or highest rotation speed of the unit 130 is in the range of 1.5 - 1.7 times the first or lowest rotation speed of the unit 130. When the diameter of the openings 133 is about 0.40 mm, particularly good results are obtained if the second or highest rotation speed of the unit 130 is in the range of 1.3 - 1.4 times the first or lowest rotation speed of the unit 130.

As will be understood, the actual rotation speed at which the unit 130 is to be operated will depend of the diameter D of the circular sieve 132 as well as on the diameter d of the openings 133 in the circular sieve 132, as can be derived from the following equation (1) for the centripetal force acting on a body with mass m within the rotating unit 130:

$$F_c(d) = m * 0.5D * \omega^2 \hspace{3cm} (1)$$

$F_c(d)$ is the critical force required to force the body through an opening 133 with diameter d, and $\omega$ is the angular velocity of the body when on the sieve wall. As will be readily understood, the critical force $F_c$ is a function of the diameter of the openings 133 as at larger diameters d a smaller critical force is required to force the food pulp through the openings 133 of the circular sieve 132.

The above equation (1) is of course an approximation as in reality the required critical force furthermore is for instance dependent on the dimensions of the body (i.e. the food fibers), as different size fibers will be forced through an opening 133 with diameter d at different critical forces. The size of the fibers for instance will depend on the type of shredding element 131 used. However, as the actual fiber size is difficult to establish and depends on many factors, e.g. condition such as ripeness of the food product, it is not at all straightforward to extract a more elaborate equation including such additional variables. Fortunately, the above equation (1) has found to provide good initial estimates of the required rotation speeds of a unit 130 having a circular sieve 132 with a diameter D, which initial estimates may be optimized using simple experimentation using the initial estimates as a starting point.

For example, the first speed preferably is in the range of 8,000 - 9,000 RPM and the second speed is in the range of 10,500 - 12,000 RPM when the diameter of the circular sieve is in the range of 110-160 mm with holes 133 having a diameter of 0.35mm. It has been found that when the unit 130 is rotated within these speed ranges, good control over the pulp content in the juices extracted from a wide variety of food products is obtained.

As another example, the first speed preferably is in the range of 8,000 - 9,000 RPM and the second speed is in the range of 12,000 - 15,000 RPM when the diameter of the circular sieve is in the range of 110-160 mm with holes 133 having a diameter of 0.30mm. It has been found that when the unit 130 is rotated within these speed ranges, good control over the pulp content in the juices extracted from a wide variety of food products is obtained. From these examples, the skilled person will be able to extrapolate appropriate ratios of the first and second rotation speeds for different diameter openings 133 and/or different diameters of the circular sieve 132, for instance using equation (1) and/or by way of simple experimentation as explained above.

As yet another example, the first speed preferably is in the range of 7,000 - 8,000 RPM and the second speed is in the range of 10,000 - 11,000 RPM when the diameter of the circular sieve is in the range of 110-160 mm with holes 133 having a diameter of 0.40 mm. It has been found that when the unit 130 is rotated within these speed ranges, good control over the pulp content in the juices extracted from a wide variety of food products is obtained.

It should be understood that the present invention is not limited to particular diameters of the sieve 132 and the sieve openings 133 respectively and that any suitable diameter d, D may be contemplated.

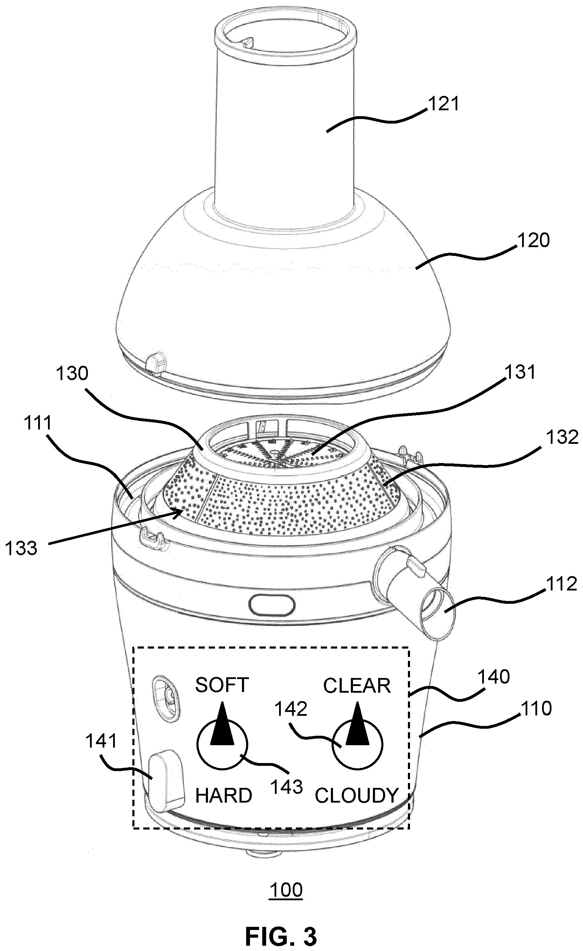

In yet another embodiment, the user interface 140 may further include a food type selection function 143 as shown in FIG. 3. The food type selection function 143 may be implemented in any suitable manner, such as for instance as a switch that can be switched between different types of food, indicated by way of non-limiting example as 'SOFT' and 'HARD' in FIG.3. It should be understood that any suitable indication of the different food types may be used, such as the indication of soft fruits, hard fruits, soft vegetables and hard vegetables, the indication of particular food types such as orange, apple, carrot and so on. Many other variations will be apparent to the skilled person. As mentioned before, the food type selection function 143 may instead be implemented as a plurality of discrete buttons, a touch-screen device, a selection button cooperating with a display displaying selection options and so on. It will be appreciated by the person skilled in the art that any suitable selection mechanism, e.g. any suitable embodiment of the food type selection function 143 may be contemplated. The food type selection function 143 may be configured to select any suitable number of different food types; e.g. 2 different food types, 3 different food types, 4 different food types and so on.

In this embodiment, the motor controller is responsive to both the food type selection function 143 and the pulp content selection function 142. In other words, the controller may be configured to select an appropriate rotation speed for the unit 130 as a function of food type as well as pulp content, such that for different food types different rotation speeds and/or rotation speed ratios may be employed.

For instance, upon a user selecting a soft food product, the controller may respond to the pulp content selection function by selecting a first lower speed if the 'CLEAR' option is selected and by selecting a first higher speed if the 'CLOUDY' option is selected. In contrast, upon a user selecting a hard food product, the controller may respond to the pulp content selection function by selecting a second lower speed if the 'CLEAR' option is selected and by selecting a second higher speed if the 'CLOUDY' option is selected, wherein the first lower speed may be different than the second lower speed, and/or the first higher speed may be different to the second higher speed. The latter is particularly likely, given that different higher rotation speeds may be required to obtain the desired pulp content in the extracted juice as demonstrated by tables 1-4 and FIG. 4.

Consequently, the combination of a food type selection function 143 and a pulp content selection function 142 forming part of the user interface 140 allows for the optimization of the various rotation speeds of the unit 130 as a function of the food type, thereby providing a greater control over the pulp content in the extracted juices compared to the embodiments shown in FIG. 1 and 2, in which a single set of pre-defined rotation speeds are used for all food types. The appropriate values for the lower and higher rotation speeds as a function of food type may be experimentally determined, such as from the experimental data in Tables 1-4 and FIG. 4 or by performing separate experiments in analogy therewith.

In the above embodiments, a user of the juicer 100 may indicate the desired pulp content in the juice to be produced by the juicer 100 in a qualitative fashion (e.g. low or high pulp content) using the pulp content selection function as for instance implemented by the switch 142 or the dial 242, for instance by indicating if the juice should be clear or cloudy. However, in an alternative embodiment, the pulp content selection function may allow the user to quantify the pulp content, e.g. "1% pulp in orange juice". In this embodiment, the juicer 100 may be configured to select the appropriate rotation speed of the motor driving the circular sieve 132 based on the selected value of the pulp content.

Such values may for instance be empirically determined, such as for instance from the pulp content curves as shown in FIG. 4. As before, the controller of the motor, e.g. a microcontroller in the juicer 100, may for instance extract the appropriate rotation speed from a lookup table upon the user specifying the desired pulp content in the juice. As before, such a lookup table is just one of many ways in which the controller of the motor can be configured to select the appropriate rotation speed of the motor; other embodiments, such as the hard-wiring of these appropriate values into the controller or any other suitable implementation of the desired controller responsiveness are equally feasible.

In the above embodiments the operation of the juicer 100 has been explained based on a single circular sieve 132 having openings 133 of a particular dimension, wherein for different food types different motor rotation speeds may be applied to obtain the desired pulp content using such a sieve 132, as for instance is evident from tables 1-4 and from FIG. 4 and its description.

However, in an alternative embodiment the juicer 100 may be provided with a plurality of sieves 132, wherein different sieves 132 have openings 133 of different dimensions, e.g. a first sieve having openings of 0.3 mm, a second sieve having openings of 0.35 mm and a third sieve having openings of 0.4 mm such that for different food types a different sieve may be selected that has openings having a particularly suitable diameter for that particular type of food.

This may relax the design requirements of the motor of the juicer 100, as the range of speeds at which the motor may need to operate to produce the desired pulp content in different types of food juices may be reduced.

The user may select the appropriate food type at the user interface 140 of the juicer 100, e.g. by selecting the appropriate food type using the food type selection switch 143 in combination with inserting the corresponding sieve 132 into the receiving chamber of the body 110 of the juicer 100. Each sieve 132 may have a unique mating mechanism for mating with the juicer 100, e.g. a unique combination of protrusions, which mating mechanism may be detected by the juicer 100 to determine if the appropriate sieve 132 has been inserted into the receiving chamber. Such detection mechanisms are known per se and will therefore not be explained in further detail for the sake of brevity. The juicer 100 may produce an audible or visible warning if the selected food type does not match the inserted sieve 132, or may be prohibited from engaging the motor in case of such a mismatch.

In an alternative embodiment, the juicer 100 may automatically select the appropriate food type following the insertion of the corresponding sieve 132 into the receiving chamber of the body 110 of the juicer 100 based on the detection of the aforementioned unique mating mechanism, in which case the food type selection switch 143 may be omitted from the user interface 140. This has the advantage that no alarm has to be generated although the insertion of an unintended (wrong) sieve 132 cannot be detected in this embodiment.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

**Claims**

1. A centrifugal juicer (100) comprising:

   a food shredding element (131) cooperating with a circular sieve (132) comprising a plurality of openings (133);
   a motor adapted to rotate the circular sieve, wherein the motor has a variable rotation speed and said openings are dimensioned such that food pulp can be forced through said openings at certain rotation speeds of the motor for a variety of food types of different hardness; **characterised in that**, it further comprises
   a user interface (140) comprising a pulp content selection function (142, 242), wherein the variable rotation speed of the motor is controlled by said pulp content selection function.

2. The centrifugal juicer (100) of claim 1, wherein the pulp content selection function (142) is implemented as a switch that can be switched between a first position indicating juice having a lower pulp content and a second position indicating juice having a higher pulp content, wherein the motor (130) operates at a first speed when the switch is in the first position and operates at a second speed when the switch is in the second position, the second speed being higher than the first speed.

3. The centrifugal juicer (100) of claim 1, wherein the switch is a dial (242) that can be turned between the first position and the second position.

4. The centrifugal juicer (100) of any of claims 1-3, wherein said openings (133) have a diameter in the range of 0.25-0.5 mm.

5. The centrifugal juicer (100) of claim 2 or 3, wherein said openings (133) have a diameter of about 0.35 mm, and wherein the second speed is in the range of 1.3 - 1.5 times the first speed.

6. The centrifugal juicer (100) of claim 5, wherein the circular sieve (132) has a diameter in the range of 110-160 mm, the first speed is in the range of 8,000 - 9,000 rotations per minute and the second speed is in the range of 10,500 - 12,000 rotations per minute.

7. The centrifugal juicer (100) of claim 2 or 3, wherein said openings (133) have a diameter of about 0.30 mm, and wherein the second speed is in the range of 1.5 - 1.7 times the first speed.

8. The centrifugal juicer (100) of claim 7, wherein the circular sieve (132) has a diameter in the range of 110-160 mm, the first speed is in the range of 8,000 - 9,000 rotations per minute and the second speed is in the range of 12,000 - 15,000 rotations per minute.

9. The centrifugal juicer (100) of claim 2 or 3, wherein said openings (133) have a diameter of about 0.40 mm, and wherein the second speed is in the range of 1.3 - 1.4 times the first speed.

10. The centrifugal juicer (100) of claim 9, wherein the circular sieve (132) has a diameter in the range of 110-160 mm, the first speed is in the range of 7,000 - 8,000 rotations per minute and the second speed is in the range of 11,000 - 12,000 rotations per minute.

11. The centrifugal juicer (100) of any of claims 1-10, wherein the user interface (140) further comprises a food type selection function (143), and wherein the rotation speed of the motor selected with the pulp content selection function (142, 242) is a function of the food type selection function.

12. The centrifugal juicer (100) of any of claims 1-11, wherein the food shredding element (131) forms part of the circular sieve (132).

13. The centrifugal juicer (100) of any of claims 1-12, further comprising a juice collector (111) cooperating with the circular sieve (132) such that juice passing through said openings (133) is collected in the juice collector.

14. The centrifugal juicer (100) of any of claims 1-13, wherein the centrifugal juicer comprises a plurality of circular sieves (132) each having a plurality of openings (133), wherein the diameter of said openings is different for different sieves.

**Patentansprüche**

1. Zentrifugalentsafter (100), umfassend:

   ein Nahrungsmittelzerkleinerungselement (131), das mit einem kreisförmigen Sieb (132) zusammenwirkt, das eine Vielzahl von Öffnungen (133) umfasst;
   einen Motor, der zum Drehen des kreisförmigen Siebs ausgebildet ist, wobei der Motor eine variable Drehzahl hat und die Öffnungen dimensioniert sind, sodass für eine Reihe von Nahrungsmittelarten unterschiedlicher Härte Fruchtfleisch bei bestimmten Drehzahlen des Motors durch die Öffnungen gepresst werden kann; **dadurch gekennzeichnet, dass** er weiter umfasst
   eine Benutzerschnittstelle (140), die eine Fruchtfleischanteil-Auswahlfunktion (142, 242) umfasst, wobei die variable Drehzahl des Motors durch die Fruchtfleischanteil-Auswahlfunktion gesteuert wird.

2. Zentrifugalentsafter (100) nach Anspruch 1, wobei die Fruchtfleischanteil-Auswahlfunktion (142) als ein Schalter implementiert ist, der zwischen einer ersten Position, die Saft mit einem geringeren Fruchtfleischanteil angibt, und einer zweiten Position, die Saft mit einem höheren Fruchtfleischanteil angibt, geschaltet werden kann, wobei der Motor (130) bei einer ersten Drehzahl arbeitet, wenn sich der Schalter in der ersten Position befindet, und bei einer zweiten Drehzahl arbeitet, wenn sich der Schalter in der zweiten Position befindet, wobei die zweite Drehzahl höher ist als die erste Drehzahl.

3. Zentrifugalentsafter (100) nach Anspruch 1, wobei der Schalter eine Drehscheibe (242) ist, die zwischen der ersten Position und der zweiten Position gedreht werden kann.

4. Zentrifugalentsafter (100) nach einem der Ansprüche 1 bis 3, wobei die Öffnungen (133) einen Durchmesser im Bereich von 0,25-0,5 mm haben.

5. Zentrifugalentsafter (100) nach Anspruch 2 oder 3, wobei die Öffnungen (133) einen Durchmesser von etwa 0,35 mm haben und wobei die zweite Drehzahl im Bereich eines 1,3-1,5-Fachen der ersten Drehzahl liegt.

6. Zentrifugalentsafter (100) nach Anspruch 5, wobei das kreisförmige Sieb (132) einen Durchmesser im Bereich von 110-160 mm hat, die erste Drehzahl im Bereich von 8.000-9.000 Umdrehungen pro Minute liegt und die zweite Drehzahl im Bereich von 10.500-12.000 Umdrehungen pro Minute liegt.

**7.** Zentrifugalentsafter (100) nach Anspruch 2 oder 3, wobei die Öffnungen (133) einen Durchmesser von etwa 0,30 mm haben und wobei die zweite Drehzahl im Bereich eines 1,5-1,7-Fachen der ersten Drehzahl liegt.

**8.** Zentrifugalentsafter (100) nach Anspruch 7, wobei das kreisförmige Sieb (132) einen Durchmesser im Bereich von 110-160 mm hat, die erste Drehzahl im Bereich von 8.000-9.000 Umdrehungen pro Minute liegt und die zweite Drehzahl im Bereich von 12.000-15.000 Umdrehungen pro Minute liegt.

**9.** Zentrifugalentsafter (100) nach Anspruch 2 oder 3, wobei die Öffnungen (133) einen Durchmesser von etwa 0,40 mm haben und wobei die zweite Drehzahl im Bereich eines 1,3-1,4-Fachen der ersten Drehzahl liegt.

**10.** Zentrifugalentsafter (100) nach Anspruch 9, wobei das kreisförmige Sieb (132) einen Durchmesser im Bereich von 110-160 mm hat, die erste Drehzahl im Bereich von 7.000-8.000 Umdrehungen pro Minute liegt und die zweite Drehzahl im Bereich von 11.000-12.000 Umdrehungen pro Minute liegt.

**11.** Zentrifugalentsafter (100) nach einem der Ansprüche 1-10, wobei die Benutzerschnittstelle (140) weiter eine Fruchtfleischanteil-Auswahlfunktion (143) umfasst und wobei die Drehzahl des Motors, die mit der Fruchtfleischanteil-Auswahlfunktion (142, 242) gewählt wird, eine Funktion der Fruchtfleischanteil-Auswahlfunktion ist.

**12.** Zentrifugalentsafter (100) nach einem der Ansprüche 1-11, wobei das Nahrungsmittelzerkleinerungselement (131) Teil des kreisförmigen Siebs (132) bildet.

**13.** Zentrifugalentsafter (100) nach einem der Ansprüche 1-12, weiter umfassend einen Saftsammler (111), der mit dem kreisförmigen Sieb (132) zusammenwirkt, sodass Saft, der durch die Öffnungen (133) geht, im Saftsammler gesammelt wird.

**14.** Zentrifugalentsafter (100) nach einem der Ansprüche 1-13, wobei der Zentrifugalentsafter eine Vielzahl von kreisförmigen Sieben (132) umfasst, die jeweils eine Vielzahl von Öffnungen (133) aufweisen, wobei der Durchmesser der Öffnungen für verschiedene Siebe unterschiedlich ist.


**Revendications**

**1.** Centrifugeuse presse-fruits (100) comprenant :

un élément de déchiquetage d'aliments (131) coopérant avec un tamis circulaire (132) comprenant une pluralité d'ouvertures (133) ;
un moteur conçu pour faire tourner le tamis circulaire, dans lequel le moteur a une vitesse de rotation variable et lesdites ouvertures sont dimensionnées de sorte que la pulpe alimentaire peut être forcée à travers lesdites ouvertures à certaines vitesses de rotation du moteur pour une variété de types d'aliments de dureté différente ;
**caractérisée en ce qu'**elle comprend en outre
une interface utilisateur (140) comprenant une fonction de sélection de teneur en pulpe (142, 242), dans laquelle la vitesse de rotation variable du moteur est commandée par ladite fonction de sélection de teneur en pulpe.

**2.** Centrifugeuse presse-fruits (100) selon la revendication 1, dans laquelle la fonction de sélection de teneur en pulpe (142) est mise en oeuvre comme un commutateur qui peut être commuté entre une première position indiquant du jus ayant une teneur en pulpe plus basse et une seconde position indiquant du jus ayant une teneur en pulpe plus élevée, dans lequel le moteur (130) fonctionne à une première vitesse quand le commutateur est dans la première position et fonctionne à une seconde vitesse quand le commutateur est dans la seconde position, la seconde vitesse étant plus élevée que la première vitesse.

**3.** Centrifugeuse presse-fruits (100) selon la revendication 1, dans laquelle le commutateur est un cadran (242) qui peut être tourné entre la première position et la seconde position.

**4.** Centrifugeuse presse-fruits (100) selon l'une quelconque des revendications 1 à 3, dans laquelle lesdites ouvertures (133) ont un diamètre dans la plage de 0,25 à 0,5 mm.

**5.** Centrifugeuse presse-fruits (100) selon la revendication 2 ou 3, dans laquelle lesdites ouvertures (133) ont un diamètre d'environ 0,35 mm et dans laquelle la seconde vitesse est dans la plage de 1,3 à 1,5 fois la première vitesse.

**6.** Centrifugeuse presse-fruits (100) selon la revendication 5, dans lequel le tamis circulaire (132) a un diamètre dans la plage de 110 à 160 mm, la première vitesse est dans la plage de 8 000 à 9 000 tours par minute et la seconde vitesse est dans la plage de 10 500 à 12 000 tours par minute.

**7.** Centrifugeuse presse-fruits (100) selon la revendication 2 ou 3, dans laquelle lesdites ouvertures (133) ont un diamètre d'environ 0,30 mm et dans laquelle la seconde vitesse est dans la plage de 1,5 à 1,7 fois la première vitesse.

**8.** Centrifugeuse presse-fruits (100) selon la revendication 7, dans laquelle le tamis circulaire (132) a un diamètre dans la plage de 110 à 160 mm, la première vitesse est dans la plage de 8 000 à 9 000 tours par minute et la seconde vitesse est dans la plage de 12 000 à 15 000 rotations par minute.

**9.** Centrifugeuse presse-fruits (100) selon la revendication 2 ou 3, dans laquelle lesdites ouvertures (133) ont un diamètre d'environ 0,40 mm et dans laquelle la seconde vitesse est dans la plage de 1,3 à 1,4 fois la première vitesse.

**10.** Centrifugeuse presse-fruits (100) selon la revendication 9, dans laquelle le tamis circulaire (132) a un diamètre dans la plage de 110 à 160 mm, la première vitesse est dans la plage de 7 000 à 8 000 tours par minute et la seconde vitesse est dans la plage de 11 000 à 12 000 tours par minute.

**11.** Centrifugeuse presse-fruits (100) selon l'une quelconque des revendications 1 à 10, dans laquelle l'interface utilisateur (140) comprend en outre une fonction de sélection de type d'aliments (143) et dans laquelle la vitesse de rotation du moteur sélectionnée avec la fonction de sélection de teneur en pulpe (142, 242) est une fonction de la fonction de sélection de type d'aliments.

**12.** Centrifugeuse presse-fruits (100) selon l'une quelconque des revendications 1 à 11, dans laquelle l'élément de déchiquetage d'aliments (131) forme une partie du tamis circulaire (132).

**13.** Centrifugeuse presse-fruits (100) selon l'une quelconque des revendications 1 à 12, comprenant en outre un collecteur de jus (111) coopérant avec le tamis circulaire (132) de sorte que le jus passant à travers lesdites ouvertures (133) est collecté dans le collecteur de jus.

**14.** Centrifugeuse presse-fruits (100) selon l'une quelconque des revendications 1 à 13, dans laquelle la centrifugeuse presse-fruits comprend une pluralité de tamis circulaires (132), chacun ayant une pluralité d'ouvertures (133), dans lesquelles le diamètre desdites ouvertures est différent pour des tamis différents.

CLEAR

CLOUDY

100

**FIG. 1**

121

120

130    131    132

111

133

112

242

140    110

141    CLEAR    CLOUDY

100

**FIG. 2**

100

**FIG. 3**

## FIG. 4

**EP 3 151 707 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130312623 A1

- US 5405096 A